# EUROPÄISCHE PATENTSCHRIFT

(11) **EP 1 982 090 B1**
(45) Veröffentlichungstag und Bekanntmachung des Hinweises auf die Patenterteilung: **12.12.2012**
(21) Anmeldenummer: 07703043.5
(22) Anmeldetag: 25.01.2007
(51) Int. Cl.: F16D 65/56

(54) **SCHEIBENBREMSE, INSBESONDERE FÜR NUTZFAHRZEUGE**
DISC BRAKE, IN PARTICULAR FOR COMMERCIAL VEHICLES
FREIN A DISQUES, NOTAMMENT POUR VEHICULES UTILITAIRES

(30) Priorität: 06.02.2006 DE 102006005297
(43) Veröffentlichungstag der Anmeldung: 22.10.2008
(73) Patentinhaber: Wabco Radbremsen GmbH, 68229 Mannheim (DE)
(72) Erfinder: JUNGMANN, Hans-Christian, 69469 Weinheim (DE); KELLER, Marcus, 69469 Weinheim (DE); ANTONY, Paul, 67550 Worms (DE)
(74) Vertreter: Leinweber & Zimmermann
(86) Internationale Anmeldenummer: PCT/EP2007/000653
(87) Internationale Veröffentlichungsnummer: WO 2007/090525

(56) Entgegenhaltungen:
- EP-B1- 0 834 672
- DE-A1- 4 034 165
- DE-B3- 10 331 929
- DE-C1- 19 903 620

## Beschreibung

Die Erfindung betrifft eine Scheibenbremse, insbesondere für Nutzfahrzeuge, mit
einem Bremssattel,
einer Nachstelleinrichtung, die eine sich in eine Durchgangsöffnung des Bremssattels erstreckende Justierwelle aufweist, und
einer Dichteinrichtung zum Abdichten eines Ringraumes zwischen der Justierwelle und einer die Durchgangsöffnung begrenzenden Innenwand.

Eine solche Scheibenbremse ist bekannt, beispielsweise aus der EP 0 834 672 B1. Bei der bekannten Scheibenbremse ist die Justierwelle einstückig mit dem Nachstellteil ausgebildet. Sie ist als Justiereinrichtung in einer solchen Scheibenbremse notwendig, um beispielsweise für Servicearbeiten den Abstand zwischen Bremsbelag und Bremsscheibe verändern zu können und/oder Kontrollen der Bremse durchzuführen. Die Justierwelle ist nämlich derart mit der Nachstelleinrichtung gekoppelt, daß ein Verdrehen der Justierwelle die Nachstelleinrichtung derart betätigt, daß sich der Abstand zwischen Bremsbelag und Bremsscheibe ändert.

Da sich die Justierwelle in eine Durchgangsöffnung des Bremssattels erstreckt, muß ein Dichtsystem vorhanden sein, das den Sattelinnenraum vor Umwelteinflüssen - wie beispielsweise Schmutz und Feuchtigkeit - schützt. Dazu dient die oben erwähnte Dichteinrichtung.

Die Dichteinrichtung nach der EP 0 834 672 B1, Figur 4, ist nicht eindeutig in ihrer Einbaulage definiert, weshalb sie sich infolge von Bremsenschwingungen nachteilig verschieben kann. Dadurch kann es zu einem Dichtungsverlust kommen. Darüber hinaus besteht die Gefahr von Beschädigungen bei Justierarbeiten.

Bei der Ausgestaltung nach der EP 0 834 672 B1, Figur 5, besteht zusätzlich das Problem, daß die Dichteinrichtung an einem Bund des Sattels anliegt, weshalb sie nur unter Demontage des Sattels ausgetauscht werden kann.

Der Erfindung liegt die Aufgabe zugrunde, die Scheibenbremse der eingangs genannten Art derart weiterzubilden, daß die Dichteinrichtung in ihrer Einbaulage definiert ist und gleichzeitig sichergestellt ist, daß sie ohne Demontage des Sattels ausgetauscht werden kann.

Erfindungsgemäß wird die gestellte Aufgabe bei der Scheibenbremse der eingangs genannten Art durch eine lösbar an dem Bremssattel anbringbare Halteeinrichtung im Form einer metallischen Hülse zum Halten der Dichteinrichtung bezüglich des Bremssattels in Axialrichtung der Justierwelle gelöst.

Da die Halteeinrichtung die Dichteinrichtung in Axialrichtung der Justierwelle bezüglich des Bremssattels festhält, ist die Einbauposition der Dichteinrichtung in Axialrichtung festgelegt. Dennoch kann die Dichteinrichtung ohne Demontage des Bremssattels ausgetauscht werden, weil die Halteeinrichtung lösbar an dem Bremssattel anbringbar ist. Insbesondere ist kein Bund oder dergleichen an dem Bremssattel erforderlich, der einen solchen Austausch ohne Demontage des Bremssattels unmöglich machen würde.

Erfindungsgemäß wird es als mechanisch besonders einfach bevorzugt, daß die Halteeinrichtung dazu ausgelegt ist, nach Art eines Preßsitzes in der Durchgangsöffnung zu sitzen. Dadurch ist sie nämlich insbesondere besonders leicht montierbar/demontierbar.

Nach einer weiter bevorzugten Ausführungsform der Erfindung ist ein Anschlag an dem Bremssattel zum Begrenzen einer Verschiebung der Halteeinrichtung in Axialrichtung der Justierwelle und nach innerhalb des Bremssattels vorgesehen. Insbesondere dann, wenn die Halteeinrichtung zum Herstellen des Preßsitzes in die Durchgangsöffnung eingedrückt wird, sorgt ein solcher Anschlag für eine definierte Lage der Halteeinrichtung und damit der Dichteinrichtung.

Der Anschlag ist erfindungsgemäß bevorzugt dadurch gebildet, daß die Durchgangsöffnung von innen nach außen größer wird. Diese Ausgestaltung trägt im übrigen dazu bei, daß die Halteeinrichtung zusammen mit der Dichteinrichtung in einfacher Weise demontiert werden kann, insbesondere ohne Demontage des Bremssattels.

Erfindungsgemäß weiter bevorzugt wird die Durchgangsöffnung in einer oder mehreren Stufen von innen nach außen größer. Bei einer solchen Ausgestaltung kann beispielsweise der Anschlag von einer nach außen weisenden Fläche einer Stufe gebildet sein.

Bevorzugt sind eine, zwei oder mehr Stufen vorgesehen.

Nach einer besonders bevorzugten Ausführungsform der Erfindung liegt kein Teil der Durchgangsöffnung zwischen der Halteeinrichtung und dem Anschlag. Dadurch besteht nicht die Gefahr, daß die Dichteinrichtung zwischen der Halteeinrichtung und dem Anschlag zerquetscht wird.

Nach einer weiter bevorzugten Ausführungsform der Erfindung ist vorgesehen, daß die Halteeinrichtung die Justierwelle in Radialrichtung und/oder Axialrichtung der Justierwelle bezüglich des Bremssattels hält. Mit anderen Worten dient die Halteeinrichtung bei dieser Ausgestaltung nicht nur dem Zwecke, die Dichteinrichtung zu halten, sondern gleichzeitig auch zum Festlegen der Einbaulage der Justierwelle, und zwar in Radial- und/oder Axialrichtung. Diese Mehrzweck-Eigenschaft der Halteeinrichtung resultiert in einer Verringerung der Teilezahl.

Bevorzugt liegt kein Teil der Dichteinrichtung zwischen der Halteeinrichtung und der Justierwelle. Wiederum wird dadurch erreicht, daß insbesondere in dem Falle, wo die Halteeinrichtung die Justierwelle hält, kein Zerquetschen der Dichteinrichtung zwischen der Halteeinrichtung und der Justierwelle zu befürchten ist.

Nach einer besonders bevorzugten Ausführungsform der Erfindung ist vorgesehen, daß die Nachstelleinrichtung einen Spindeltrieb aufweist und die Drehachse der Justierwelle parallel zu der Drehachse des Spindeltriebes liegt. Dadurch ist eine Kopplung der Justierwelle mit dem Spindeltrieb besonders einfach. Es bedarf nämlich keiner Umlenkung der Drehbewegung beim Justieren.

Weiter bevorzugt ist nach der Erfindung vorgesehen, daß die Nachstelleinrichtung einen Spindeltrieb aufweist und die Drehachse der Justierwelle nicht mit der Drehachse des Spindeltriebes zusammenfällt. Insbesondere dann, wenn die Drehachse der Justierwelle parallel zu der Drehwelle des Spindeltriebes liegt, kann bei dieser Ausgestaltung derjenige Bauraum, der von der Bremsscheibe her gesehen hinter dem Spindeltrieb liegt, freigehalten werden, beispielsweise für eine Zuspannwelle, eine Sensoreinrichtung oder einen Betätigungszylinder.

Bevorzugt verjüngt sich die Halteeinrichtung nach innen des Bremssattels hin. Dadurch ist sie besonders leicht durch Eindrücken in die Durchgangsöffnung montierbar.

Die Halteeinrichtung ist erfindungsgemäß bevorzugt dazu ausgelegt, eine Verschlußeinrichtung zu halten. Mit anderen Worten wird der Halteeinrichtung nach dieser Ausgestaltung noch ein weiterer Zweck zugewiesen, was die Gesamtkonstruktion vereinfacht.

Die Dichteinrichtung ist erfindungsgemäß bevorzugt unlösbar an der Halteeinrichtung angebracht. Dadurch bilden die Dichteinrichtung und die Halteeinrichtung zusammen eine Baugruppe, die mit einem einzigen Vorgang montierbar und demontierbar ist, was den Montage-/Demontageaufwand verringert.

Die Dichteinrichtung kann an die Halteeinrichtung angeformt sein, vorzugsweise durch Anvulkanisieren. Auf diese Art und Weise wird eine erhebliche Freiheit bei der Ausgestaltung sowohl der Halteeinrichtung als auch der Dichteinrichtung erreicht.

Erfindungsgemäß bevorzugt weist die Dichteinrichtung mindestens eine Dichtlippe zur Anlage an der Justierwelle auf.

Ferner weist sie bevorzugt mindestens eine Dichtlippe, eine Rillierung oder einen Wulst zur Anlage an der Innenwand der Durchgangsöffnung auf.

Derartige Einrichtungen verbessern die Dichtfunktion bei geringstem Platzbedarf. Sie können redundant ausgeführt werden.

Die Justierwelle kann unmittelbar mit der Nachstelleinrichtung bzw. deren Spindeltrieb gekoppelt sein. Es kann aber auch vorgesehen sein, daß die Justierwelle undrehbar mit einer Getriebeeinrichtung zur Kopplung mit der Nachstelleinrichtung verbunden ist. Dadurch ergibt sich die Möglichkeit, für die Justierwelle einerseits und die Getriebeeinrichtung andererseits unterschiedliche Materialien vorzusehen, wodurch bei Sicherstellung der Funktionsfähigkeit insbesondere Kostenvorteile erzielbar sind.

Erfindungsgemäß bevorzugt weist die Scheibenbremse eine parallel zur Bremsscheibenebene liegende Zuspannwelle auf.

Ferner weist sie erfindungsgemäß bevorzugt ein sich parallel zur Bremsscheibenebene erstreckendes Druckstück auf, das zum Zuspannen der Bremse von der Zuspannwelle gegen mindestens einen Bremsbelag gedrückt wird. Dieses Druckstück dient dabei zur Vergleichmäßigung der Verteilung der Bremskraft auf den bzw. die Bremsbelag/Bremsbeläge, insbesondere um Schrägverschleiß zu vermeiden.

Im folgenden ist die Erfindung unter Bezugnahme auf die beiliegende Zeichnung mit weiteren Einzelheiten näher erläutert. Dabei zeigen
- Figur 1: eine teilweise geschnittene Seitenansicht eines Ausführungsbeispiels der erfindungsgemäßen Scheibenbremse,
- Figur 2: eine teilweise geschnittene Draufsicht auf die Bremse nach Figur 1,
- Figur 3: eine perspektivische Ansicht der Bremse nach Figur 1,
- Figur 4: eine teilweise geschnittene Detailansicht der Bremse nach Figur 1,
- Figur 5: eine Explosivdarstellung einer Justiereinrichtung mit zugehörigen weiteren Bauelementen der Bremse nach Figur 1,
- Figur 6: die gleichen Teile wie Figur 5, jedoch in zusammengesetztem Zustand,
- Figur 7: einzelne Bauelemente aus Figur 5, in zusammengesetztem Zustand, und
- Figur 8: die gleiche Ansicht wie Figur 7, jedoch von einem anderen Ausführungsbeispiel.

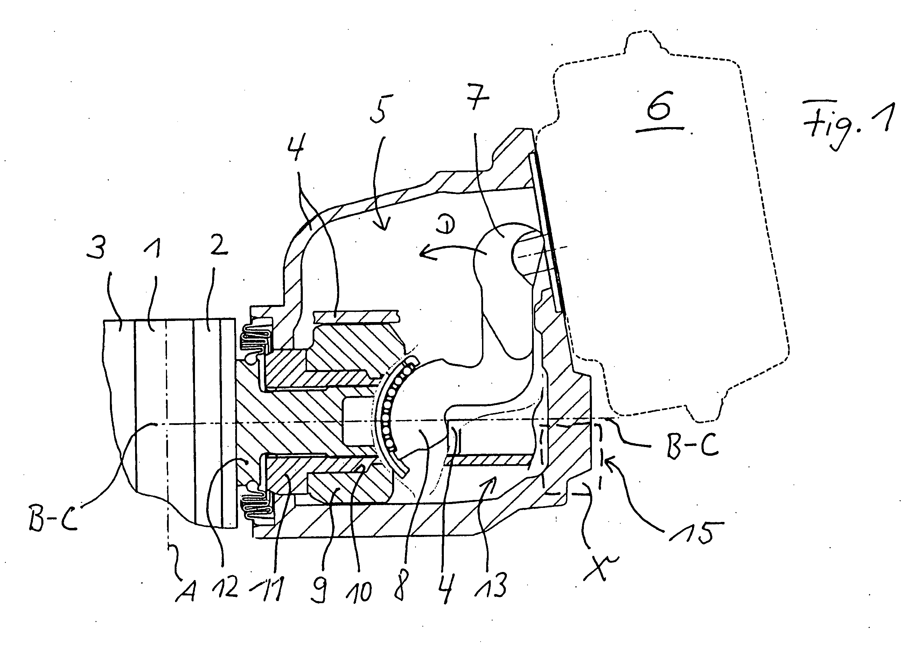

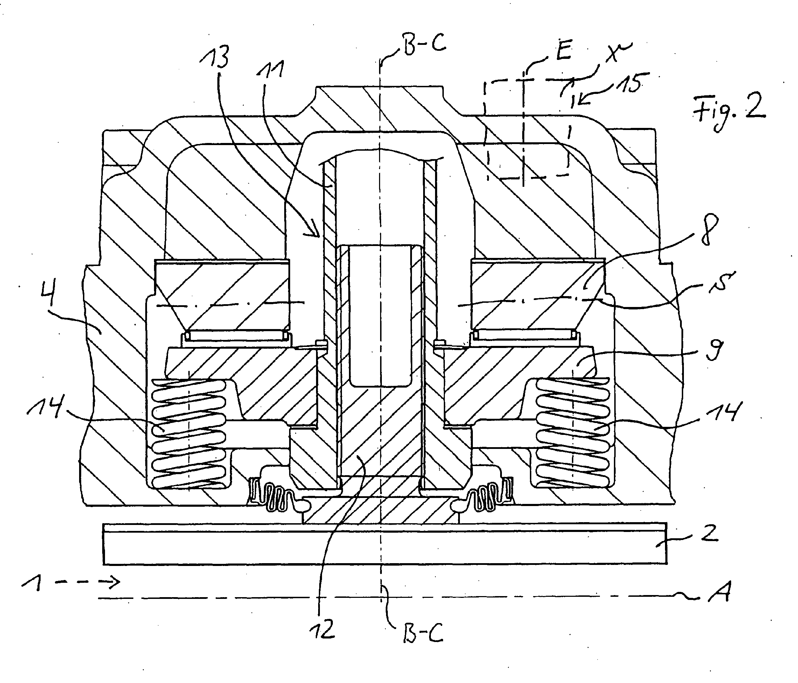

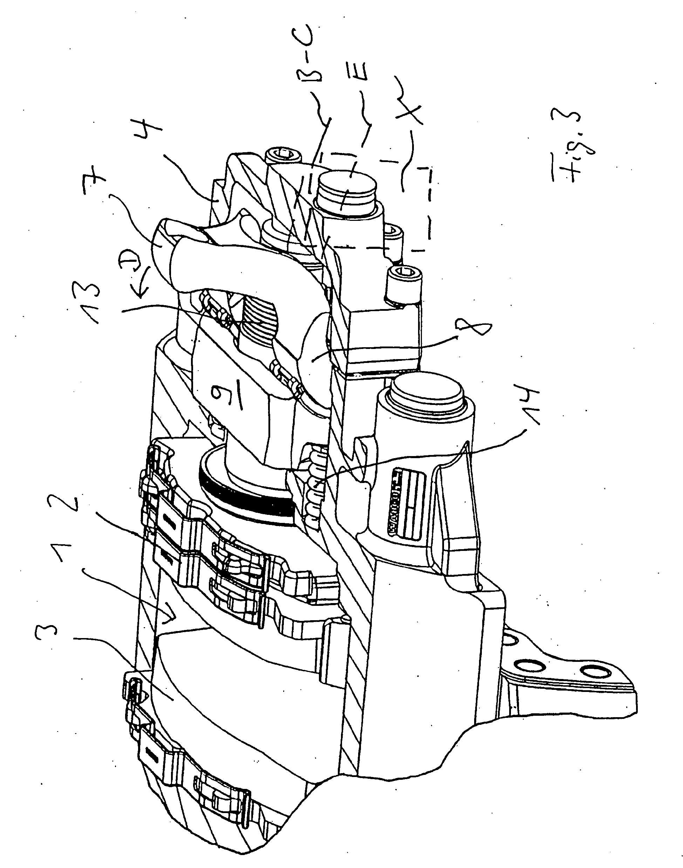

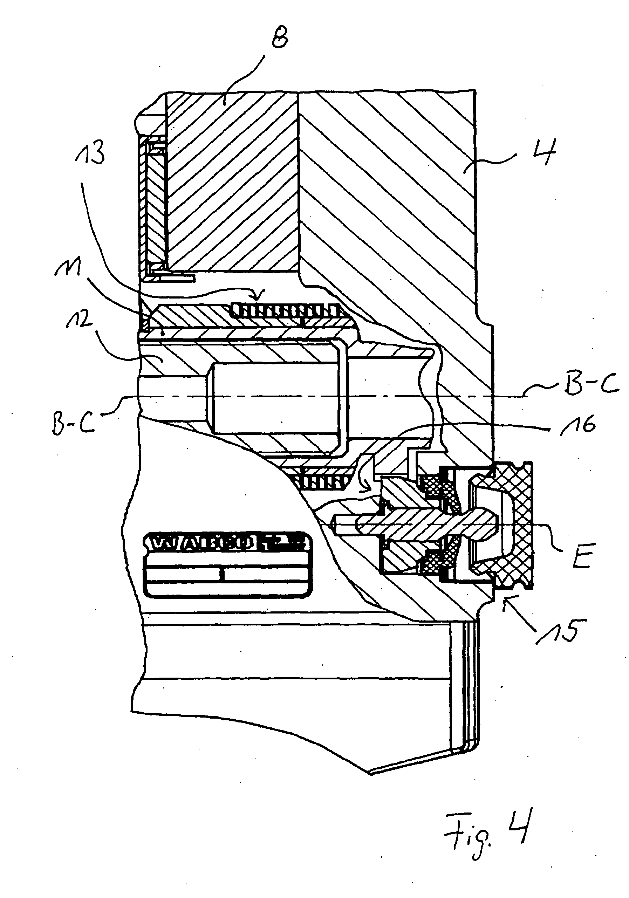

Die Figuren 1 bis 3 zeigen verschiedene Darstellungen eines Ausführungsbeispiels der erfindungsgemäßen Scheibenbremse, wobei mit einem Rechteck X die Lage einer Justiereinrichtung 15 angedeutet ist. Einzelheiten der Justiereinrichtung sind den Figuren 4 bis 8 zu entnehmen.

Die Zeichnung zeigt eine Bremsscheibe 1 mit einer Bremsscheibenebene A, zwei Bremsbeläge 2, 3 und einen die Bremsscheibe 1 übergreifenden Bremssattel 4. Eine Zuspanneinrichtung ist mit der Bezugszahl 5 bezeichnet. Zur Betätigung der Bremse dient ein Betätigungszylinder 6. Über den Betätigungszylinder 6, der beispielsweise pneumatisch betrieben ist, wird ein Drehhebel 7 zum Zuspannen in Richtung eines Pfeiles D um eine Schwenkachse S verdreht. Dadurch verdreht sich auch eine einstückig mit dem Drehhebel 7 ausgeführte Zuspannwelle 8, die sich bremsscheibenabgewandt an dem Bremssattel 4 und bremsscheibenzugewandt an einem verschieblich gelagerten Druckstück 9 abstützt. Das Druckstück 9 hält in einer Durchgangsöffnung 16 eine Stellmutter 11, die ihrerseits auf eine Druckspindel 12 aufgeschraubt ist. Die Stellmutter 11 und die Druckspindel 12 bilden gemeinsam einen Spindeltrieb zum Nachstellen der Bremse. Die Dreh- bzw. Verschiebeachse des Spindeltriebes 11, 12 ist mit B-C bezeichnet. Die Bezugszahl 13 bezeichnet die gesamte Nachstelleinrichtung. Zum Rückstellen der Bremse nach dem Zuspannen dient eine Druckfeder 14.

Es sei ausdrücklich darauf hingewiesen, daß sowohl die Form der Nocken der Nokkenwelle 8 als auch deren Lagerung im Bremssattel 4 von der in der Zeichnung dargestellten Form abweichen können.

Das Druckstück 9 hat annähernd rechteckige Form. Es dient dazu, die beim Zuspannen wirkende Kraft möglichst gleichmäßig auf den Bremsbelag 2 zu verteilen, um Schrägverschleiß zu vermeiden. Dies gilt auch für den Spindeltrieb, der auch in beliebiger Form, ein- oder mehrspindelig, ausgeführt sein kann.

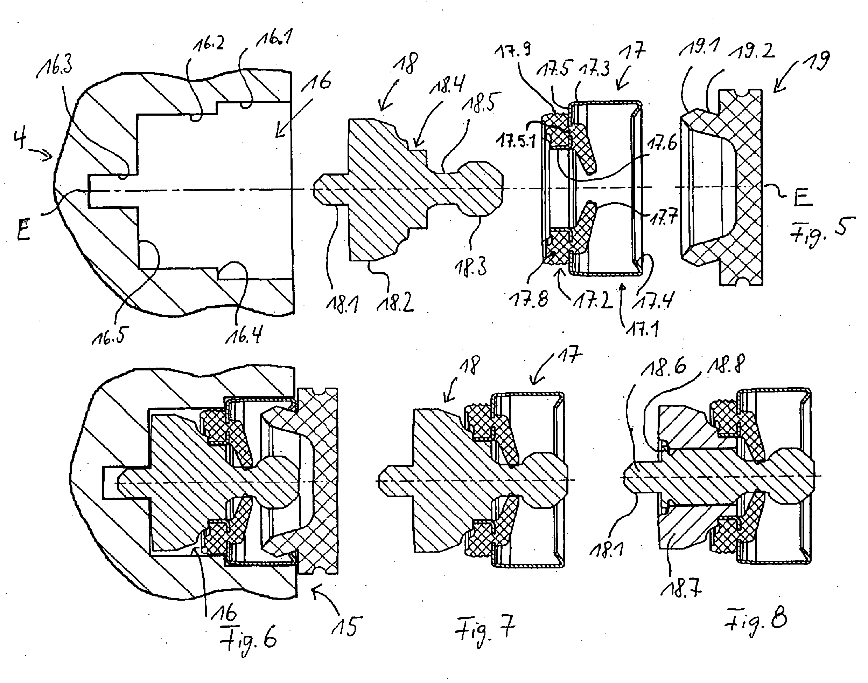

Im folgenden wird Bezug genommen auf die Figuren 5 bis 8. Danach weist der Sattel 4 eine stufenförmige Durchgangsöffnung 16 auf, die mittels eines Dichtsystems 17 abgedichtet ist. In die Durchgangsöffnung 16 erstreckt sich eine Justierwelle 18. Ein Verschlußstopfen ist mit der Bezugszahl 19 bezeichnet.

Der am weitesten links gelegene Teil von Figur 5 zeigt eine zweifach abgestufte Durchgangsöffnung 16 mit Lagerbereichen 16.1, 16.2 und 16.3, wodurch in Axialrichtung gesehen durch die Abstufung von groß nach klein Anlageflächen 16.4 und 16.5 gebildet sind.

Bei der in der Zeichnung dargestellten Ausführungsform der Erfindung ist die Justierwelle 18 ebenfalls stufenförmig ausgebildet. Sie weist einen dem Lagerbereich 16.3 benachbarten Zapfenbereich 18.1, einen mit der Nachstellvorrichtung 13 (Figur 4) in Eingriff stehenden Zahnradbereich 18.2 sowie einen am Ende angeordneten Mehrkantkopf 18.3 auf, der zum Ansetzen eines komplementären Werkzeuges für Justierarbeiten (Drehung) dient. Auf den Mehrkantkopf kann ein Standardwerkzeug für einzuleitende Drehbewegungen in beliebigen Winkelstellungen aufgesetzt werden. Zwischen dem Zahnradbereich 18.2 (selbstverständlich sind auch andere Übertragungsformen möglich) und dem Mehrkantkopf 18.3 sind bei der in der Zeichnung dargestellten Ausführungsform der Erfindung abgestufte und im Durchmesser verminderte Bereiche 18.4 und 18.5 ausgebildet. Wie insbesondere den Figuren 6, 7 und 8 zu entnehmen ist, bildet insbesondere der Bereich 18.4 sowohl eine Radial- als auch eine Axiallagerung für das weiter unten beschriebene Dichtsystem 17. Das gleiche gilt für die Mantelfläche des Bereichs 18.5.

Die Justierwelle 18 ist zum Justieren um eine Drehachse E verdrehbar. Die Drehachse E liegt parallel zu der Drehachse B-C des Spindeltriebs 11, 12, fällt damit jedoch nicht zusammen. Dadurch liegt die Justiereinrichtung 15 nicht in dem von der Bremsscheibe 1 her gesehen hinter der Stellmutter 11 gelegenen Bereich der Scheibenbremse, so daß dieser Bereich für andere Dinge genutzt werden kann, beispielsweise für eine Sensoreinrichtung.

Das Dichtsystem 17 besteht bei dem in der Zeichnung dargestellten Ausführungsbeispiel der Erfindung aus zwei Teilen unterschiedlicher Werkstoffe, nämlich einer metallischen Hülse 17.1 und einer Dichtung aus einem Elastomer (beispielsweise Gummi) 17.2. Es sind mehrere hintereinanderliegende Dichtbereiche vorgesehen. Mit anderen Worten wird redundant abgedichtet.

Da die Hülse 17.1 aus Metall ist, ist sie unempfindlich gegen Deformationen beim Einpressen in den Bremssattel 4. Bei dem in der Zeichnung dargestellten Ausführungsbeispiel der Erfindung ist die Hülse 17.1 auf das Sattelinnere hinweisend leicht verjüngt, wodurch sie sich besser in den Lagerbereich 16.1 einpressen und in diesem positionieren läßt. Die Hülse 17.1 weist an ihrem äußeren Ende einen schräg nach innen verlaufenden Haltebund 17.4 (hakenförmig durch Umbördeln) auf, weshalb der Verschlußstopfen 19 über Eindrück- und Halteschrägen 19.1, 19.2 leicht und verliersicher in die Hülse 17.1 eingedrückt werden kann. Mithin ist der Verschlußstopfen 19 nicht an dem Bremssattel 4 selbst, sondern vielmehr an der Hülse 17.1 gehalten. Die Hülse 17.1 kann auch mehrteilig ausgeführt sein.

An ihrem zum Inneren der Bremse weisenden Ende weist die Hülse 17.1 einen Bundbereich 17.5 auf, der eine Stufe bildet und einen rohrförmigen Ansatz 17.6 trägt. Der Bundbereich 17.5 und der rohrförmige Ansatz 17.6 erfüllen mehrere Funktionen. Zum einen dienen sie zum Anformen/Anvulkanisieren der eigentlichen Dichtung 17.2. Dazu sind an dem Bundbereich 17.5 mehrere Durchgangsöffnungen vorgesehen, durch die hindurch die Dichtung 17.2 den Bundbereich 17.5 durchdringt. Eine solche Durchgangsöffnung ist mit der Bezugszahl 17.5.1 bezeichnet. Darüber hinaus dient der Bundbereich 17.5 zusammen mit der Anlagefläche 16.4 als Axialanschlag beim Einpressen des Dichtsystems 17 in die Durchgangsöffnung 16 des Bremssattels 4. Dadurch ist das Dichtsystem 17 und damit insbesondere die Dichtung 17.2 in Axialrichtung festgelegt. Ferner bildet der rohrförmige Ansatz 17.6 für die Justierwelle 18 sowohl eine Radial- als auch eine Axiallagerung, weil die Justierwelle 18 in ihrem Bereich 18.4 von dem Ansatz 17.6 radial / axial abgestützt ist. Damit legt die in die Durchgangsöffnung 16 eingepreßte und an der Anlagefläche 16.4 anliegende Hülse 17.1 auch die Einbaulage der Justierwelle 18 fest.

Der Abstand zwischen den Anlageflächen 16.4 und 16.5 ist derart definiert bzw. bemessen, daß ein Klemmen sowie ein Verkanten der Justierwelle 18 ausgeschlossen und deren einwandfreie Drehbarkeit gewährleistet ist.

Die (eigentliche) Dichtung 17.2 erstreckt sich beidseits des Bundbereiches 17.5. Dabei bildet sie eine nach radial innen ausgerichtete ringförmige Dichtlippe 17.7, deren innerer Durchmesser geringfügig kleiner ist als der Durchmesser des Bereichs 18.5 der Justierwelle 18, weshalb die Dichtlippe 17.7 in montiertem Zustand mit Vorspannung an dem Bereich 18.5 anliegt. Der Bereich 18.5 kann konisch ausgeführt sein, wodurch sich die Dichtlippe 17.7 beim Zusammenbau selbsttätig positioniert. Im Bereich des Ansatzes 17.6 ist die Dichtung 17.2 in Form eines Dichtungsrings 17.8 ausgebildet, dessen Durchmesser demjenigen des Lagerbereichs 16.2 entspricht. Am Außenumfang des Dichtungsrings 17.8 sind Rillierungen 17.9 ausgebildet, was die Dichtwirkung erhöht, weil wiederum eine redundante Dichtung vorliegt.

Ein besonderer Vorteil ergibt sich aus der Lage des Dichtungsrings 17.8. Da dieser vergleichsweise weit von dem Mehrkantkopf 18.3 entfernt liegt, besteht keine Beschädigungsgefahr, wenn ein Werkzeug an dem Mehrkantkopf 18.3 angesetzt wird, um die Justierwelle 18 zu drehen.

Figur 8 zeigt eine zweiteilige Ausgestaltung der Justierwelle 18, nämlich aufweisend einen Innenkörper 18.6 und einen Zahnradkörper 18.7. Im übrigen unterscheidet sich die Justierwelle 18.6, 18.7 nicht von der Justierwelle 18 nach den Figuren 5 bis 7. Der Vorteil der Mehrteiligkeit (hier zwei Teile) besteht in der einfacheren Herstellung, weil unterschiedliche Materialien und/oder vorgefertigte Teile verwendet werden können. Beispielsweise kann der Innenkörper 18.6 aus Profilmaterial mit beispielsweise höherer Festigkeit sein, wohingegen der Zahnradkörper 18.7 aus einem Material mit beispielsweise geringerer Festigkeit sein kann. Damit aber die Axiallagen der beiden Körper zueinander geeignet sind, ist an dem Innenkörper 18.6 ein Anschlag, hier als Radialbund 18.8 ausgeführt, vorgesehen, an dem der Zahnradkörper 18.7 anliegt.

Wie insbesondere aus Figur 5 zu ersehen ist, sind die Konturen der Sattelöffnung 16 und die Dimensionierungen des Dichtsystems 17 sowie der Justierwelle 18 derart aufeinander abgestimmt, daß exakte Einbau-/Dichtlagen definiert sind, wie sie insbesondere in den Figuren 4 und 6 gezeigt sind. Die genannten Einzelteile können entweder wie in Figur 5 gezeigt nacheinander in die Durchgangsöffnung 16 eingebaut und zusammengeschoben werden oder schon als vormontierte Baugruppe gemäß Figur 7 oder 8 eingesetzt werden. Ist ein Teil- oder Komplettausbau der Justiereinrichtung 15 erforderlich, erfolgt dies in umgekehrter Weise ebenfalls sehr einfach, weil keine anderen Teile der Bremse dies behindern und daher keine (zusätzlichen) Demontagen erforderlich sind.

Ist die Justiereinrichtung 15 komplett eingebaut und durch den Verschlußstopfen 19 verschlossen, steht kein Justierteil über die Kontur des Bremssattels 4 über. Sowohl die Justierteile als auch der Innenraum des Bremssattels 4 sind mehrfach (redundant) gegen äußere Einflüsse geschützt. Dabei bilden der Stopfen 19 und die ringförmige Dichtlippe 17.7, die Hülse 17.1 aus einem rostfreien und/oder beschichteten Metall mit ihren Radial- und Axialdichtungsbereichen an den Öffnungsbereichen und Anlageflächen eine Mehrzahl von Abdichtungen, so daß selbst bei Ausfall eines Dichtbereiches noch ausreichend Dichtsicherung vorhanden ist. Somit ist das Dicht/Justiersystem ohne weitere Haltemittel von außen zugänglich und selbstarretierend und schließt den Sattelinnenraum mit einem mit einem redundanten Dichtsystem hermetisch ab.

Obwohl die Erfindung anhand einer Einspindelbremse beschrieben worden ist, ist sie selbstverständlich auch auf eine Zweispindelbremse mit oder ohne Druckstück anwendbar. Auch können die Drehachsen E und B-C zusammenfallen, wenn damit dieselben Vorteile/Effekte wie oben beschrieben erzielbar sind.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einem Bremssattel (4),
einer Nachstelleinrichtung (13), die eine sich in eine Durchgangsöffnung (16) des Bremssattels (4) erstreckende Justierwelle (18) aufweist, und
einer Dichteinrichtung (17.2) zum Abdichten eines Ringraumes zwischen der Justierwelle (18) und einer die Durchgangsöffnung (16) begrenzenden Innenwand,
**gekennzeichnet durch**
eine lösbar an dem Bremssattel (4) anbringbare Halteeinrichtung (17.1) in Form einer metallischen Hülse zum Halten der Dichteinrichtung (17.2) bezüglich des Bremssattels (4) in Axialrichtung der Justierwelle (18).

2. Scheibenbremse nach Anspruch 1, **dadurch gekennzeichnet, daß** die Halteeinrichtung (17.1) dazu ausgelegt ist, nach Art eines Preßsitzes in der Durchgangsöffnung (16) zu sitzen.

3. Scheibenbremse nach Anspruch 1 oder 2, **gekennzeichnet durch** einen Anschlag (16.4) an dem Bremssattel (4) zum Begrenzen einer Verschiebung der Halteeinrichtung (17.1) in Axialrichtung der Justierwelle (18) und nach innerhalb des Bremssattels (4).

4. Scheibenbremse nach Anspruch 3, **dadurch gekennzeichnet, daß** der Anschlag (16.4) dadurch gebildet ist, daß die Durchgangsöffnung (16) von innen nach außen größer wird.

5. Scheibenbremse nach Anspruch 4, **dadurch gekennzeichnet, daß** die Durchgangsöffnung (16) in einer oder mehreren Stufen von innen nach außen größer wird.

6. Scheibenbremse nach Anspruch 5, **gekennzeichnet durch** eine, zwei oder mehr Stufen.

7. Scheibenbremse nach einem der Ansprüche 3 bis 6, **dadurch gekennzeichnet, daß** kein Teil der Dichteinrichtung (17.2) zwischen der Halteeinrichtung (17.1) und dem Anschlag (16.4) liegt.

8. Scheibenbremse nach einem der vorangehenden Ansprüche, **dadurch gekennzeichnet, daß** die Halteeinrichtung (17.1) die Justierwelle (18) in Radialrichtung und/oder Axialrichtung der Justierwelle (18) bezüglich des Bremssattels (4) hält.

9. Scheibenbremse nach einem der vorangehenden Ansprüche, **dadurch gekennzeichnet, daß** kein Teil der Dichteinrichtung (17.2) zwischen der Halteeinrichtung (17.1) und der Justierwelle (18) liegt.

10. Scheibenbremse nach einem der vorangehenden Ansprüche, **dadurch gekennzeichnet, daß** die Nachstelleinrichtung (13) einen Spindeltrieb (11, 12) aufweist und die Drehachse (E) der Justierwelle (18) parallel zu der Drehachse (B-C) des Spindeltriebes (11, 12) liegt.

11. Scheibenbremse nach einem der vorangehenden Ansprüche, **dadurch gekennzeichnet, daß** die Nachstelleinrichtung (13) einen Spindeltrieb (11, 12) aufweist und die Drehachse (E) der Justierwelle (18) nicht mit der Drehachse (B-C) des Spindeltriebes (11, 12) zusammenfällt.

12. Scheibenbremse nach einem der vorangehenden Ansprüche, **dadurch gekennzeichnet, daß** die Halteeinrichtung (17.1) sich nach innen des Bremssattels (4) hin verjüngt.

13. Scheibenbremse nach einem der vorangehenden Ansprüche, **dadurch gekennzeichnet, daß** die Halteeinrichtung (17.1) dazu ausgelegt ist, eine Verschlußeinrichtung (19) zu halten.

14. Scheibenbremse nach einem der vorangehenden Ansprüche, **dadurch gekennzeichnet, daß** die Dichteinrichtung (17.2) unlösbar an der Halteeinrichtung (17.1) angebracht ist.

15. Scheibenbremse nach einem der vorhergehenden Ansprüche, **dadurch gekennzeichnet, daß** die Dichteinrichtung (17.2) an die Halteeinrichtung (17.1) angeformt ist, vorzugsweise durch Anvulkanisieren.

16. Scheibenbremse nach einem der vorangehenden Ansprüche, **dadurch gekennzeichnet, daß** die Dichteinrichtung (17.2) mindestens eine Dichtlippe (17.7) zur Anlage an der Justierwelle (18) aufweist.

17. Scheibenbremse nach einem der vorangehenden Ansprüche, **dadurch gekennzeichnet, daß** die Dichteinrichtung (17.2) mindestens eine Dichtlippe, eine Rillierung (17.9) oder einen Wulst zur Anlage an der Innenwand (16.2) der Durchgangsöffnung (16) aufweist.

18. Scheibenbremse nach einem der vorangehenden Ansprüche, **dadurch gekennzeichnet, daß** die Justierwelle (18) undrehbar mit einer Getriebeeinrichtung (18.7) zum Koppeln mit der Nachstelleinrichtung (13) verbunden ist.

19. Scheibenbremse nach einem der vorangehenden Ansprüche, **gekennzeichnet durch** eine parallel zur Bremsscheibenebene (A) liegende Zuspannwelle (8).

20. Scheibenbremse nach Anspruch 19, **gekennzeichnet durch** ein sich parallel zur Bremsscheibenebene (A) erstreckendes Druckstück (9), das zum Zuspannen der Bremse
von der Zuspannwelle (8) gegen mindestens einen Bremsbelag (2) gedrückt wird.

## Claims

1. A disc brake, in particular for utility vehicles, comprising
a brake calliper (4),
an adjusting device (13) which has an adjusting shaft (18) which extends into a passage opening (16) of the brake calliper (4), and
a sealing device (17.2) for sealing an annular space between the adjusting shaft (18) and an inner wall which delimits the passage opening (16),
**characterised by**
a holding device (17.1) that can be releaseably attached to the brake calliper (4) in the form of a metallic sleeve for holding the sealing device (17.2) in relation to the brake calliper (4) in the axial direction of the adjusting shaft (18).

2. The disc brake according to Claim 1, **characterised in that** the holding device (17.1) is designed to be seated in the passage opening (16) in the manner of a press fit.

3. The disc brake according to Claim 1 or 2, **characterised by** a stop (16.4) on the brake calliper (4) for limiting a movement of the holding device (17.1) in the axial direction of the adjusting shaft (18) and towards the inside of the brake calliper (4).

4. The disc brake according to Claim 3, **characterised in that** the stop (16.4) is formed by the passage opening (16) increasing from the inside to the outside.

5. The disc brake according to Claim 4, **characterised in that** the passage opening (16) increases in one or several steps from the inside to the outside.

6. The disc brake according to Claim 5, **characterised by** one, two or more steps.

7. The disc brake according to any of Claims 3 to 6, **characterised in that** no part of the sealing device (17.2) is positioned between the holding device (17.1) and the stop (16.4).

8. The disc brake according to any of the preceding claims, **characterised in that** the holding device (17.1) holds the adjusting shaft (18) in the radial direction and/or the axial direction of the adjusting shaft (18) in relation to the brake calliper (4).

9. The disc brake according to any of the preceding claims, **characterised in that** no part of the sealing device (17.2) is positioned between the holding device (17.1) and the adjusting shaft (18).

10. The disc brake according to any of the preceding claims, **characterised in that** the adjusting device (13) has a spindle drive (11, 12) and the axis of rotation (E) of the adjusting shaft (18) is parallel to the axis of rotation (B-C) of the spindle drive (11, 12).

11. The disc brake according to any of the preceding claims, **characterised in that** the adjusting device (13) has a spindle drive (11, 12) and the axis of rotation (E) of the adjusting shaft (18) does not coincide with the axis of rotation (B-C) of the spindle drive (11, 12).

12. The disc brake according to any of the preceding claims, **characterised in that** the holding device (17.1) tapers towards the inside of the brake calliper (4).

13. The disc brake according to any of the preceding claims, **characterised in that** the holding device (17.1) is designed to hold a closing device (19).

14. The disc brake according to any of the preceding claims, **characterised in that** the sealing device (17.2) is attached non-releaseably to the holding device (17.1).

15. The disc brake according to any of the preceding claims, **characterised in that** the sealing device (17.2) is moulded onto the holding device (17.1), preferably by vulcanising.

16. The disc brake according to any of the preceding claims, **characterised in that** the sealing device (17.2) has at least one sealing lip (17.7) to rest against the adjusting shaft (18).

17. The disc brake according to any of the preceding claims, **characterised in that** the sealing device (17.2) has at least one sealing lip, fluting (17.9) or a bead for placement against the inner wall (16.2) of the passage opening (16).

18. The disc brake according to any of the preceding claims, **characterised in that** the adjusting shaft (18) is connected non-rotatably to a gear device (18.7) for coupling to the adjusting device (13).

19. The disc brake according to any of the preceding claims, **characterised by** an application shaft (8) positioned parallel to the brake disc plane (A).

20. The disc brake according to Claim 19, **characterised by** a pressure piece (9) extending parallel to the brake disc plane (A) which is pressed against at least one brake pad (2) to apply force to the brake from the application shaft (8).

## Revendications

1. Frein à disque, notamment pour véhicules utilitaires, comportant
un étrier de frein (4),
un dispositif de rattrapage (13) présentant un arbre de réglage (18) qui se prolonge par une ouverture traversante (16) de l'étrier de freins (4), et
un dispositif d'étanchéité (17.2) destiné à réaliser l'étanchéité d'un espace annulaire entre l'arbre de réglage (18) et une paroi intérieure délimitant l'ouverture traversante (16),
**caractérisé par**
un dispositif de maintien (17.1) pouvant être installé de manière amovible sur l'étrier de frein (4) et se présentant sous la forme d'une douille métallique destinée à maintenir le dispositif d'étanchéité (17.2) par rapport à l'étrier de frein (4) dans la direction axiale de l'arbre de réglage (18).

2. Frein à disque selon la revendication 1, **caractérisé en ce que** le dispositif de maintien (17.1) est conçu pour loger dans l'ouverture traversante (16) à la manière d'un ajustage serré.

3. Frein à disque selon la revendication 1 ou 2, **caractérisé par** une butée (16.4) sur l'étrier de frein (4) destinée à limiter un déplacement du dispositif de maintien (17.1) dans la direction axiale de l'arbre de réglage (18) et vers l'intérieur de l'étrier de frein (4).

4. Frein à disque selon la revendication 3, **caractérisé en ce que** la butée (16.4) est constituée par le fait que l'ouverture traversante (16) va en s'agrandissant de l'intérieur vers l'extérieur.

5. Frein à disque selon la revendication 4, **caractérisé en ce que** l'ouverture traversante (16) va en s'agrandissant de l'intérieur vers l'extérieur en un ou plusieurs gradins.

6. Frein à disque selon la revendication 5, **caractérisé par** un, deux ou plusieurs gradins.

7. Frein à disque selon l'une des revendications 3 à 6, **caractérisé en ce qu'**il ne se trouve aucune partie du dispositif d'étanchéité (17.2) entre le dispositif de maintien (17.1) et la butée (16.4).

8. Frein à disque selon l'une des revendications précédentes, **caractérisé en ce que** le dispositif de maintien (17.1) maintient l'arbre de réglage (18) dans la direction radiale et/ou la direction axiale de l'arbre de réglage (18) par rapport à l'étrier de frein (4).

9. Frein à disque selon l'une des revendications précédentes, **caractérisé en ce qu'**il ne se trouve aucune partie du dispositif d'étanchéité (17.2) entre le dispositif de maintien (17.1) et l'arbre de réglage (18).

10. Frein à disque selon l'une des revendications précédentes, **caractérisé en ce que** le dispositif de rattrapage (13) présente un entraînement à broche (11, 12) et l'axe de rotation (E) de l'arbre de réglage (18) se situe parallèlement à l'axe de rotation (B-C) de l'entraînement à broche (11, 12).

11. Frein à disque selon l'une des revendications précédentes, **caractérisé en ce que** le dispositif de rattrapage (13) présente un entraînement à broche (11, 12) et l'axe de rotation (E) de l'arbre de réglage (18) ne coïncide pas avec l'axe de rotation (B-C) de l'entraînement à broche (11, 12).

12. Frein à disque selon l'une des revendications précédentes, **caractérisé en ce que** le dispositif de maintien (17.1) va en diminuant vers l'intérieur de l'étrier de frein.

13. Frein à disque selon l'une des revendications précédentes, **caractérisé en ce que** le dispositif de maintien (17.1) est conçu pour maintenir un dispositif de fermeture (19).

14. Frein à disque selon l'une des revendications précédentes, **caractérisé en ce que** le dispositif d'étanchéité (17.2) est installé de manière non amovible sur le dispositif de maintien (17.1).

15. Frein à disque selon l'une des revendications précédentes, **caractérisé en ce que** le dispositif d'étanchéité (17.2) est formé sur le dispositif de maintien (17.1), de préférence par vulcanisation.

16. Frein à disque selon l'une des revendications précédentes, **caractérisé en ce que** le dispositif d'étanchéité (17.2) présente au moins une lèvre d'étanchéité (17.7) destinée à venir en appui contre l'arbre de réglage (18).

17. Frein à disque selon l'une des revendications précédentes, **caractérisé en ce que** le dispositif d'étanchéité (17.2) présente au moins une lèvre d'étanchéité, un rainurage (17.9) ou un bourrelet destiné à venir en appui contre la paroi intérieure (16.2) de l'ouverture traversante (16).

18. Frein à disque selon l'une des revendications précédentes, **caractérisé en ce que** l'arbre de réglage (18) est relié de manière non rotative avec un dispositif d'engrenage (18.7) à des fins de couplage avec le dispositif de rattrapage (13).

19. Frein à disque selon l'une des revendications précédentes, **caractérisé par** un arbre de serrage (8) disposé parallèlement au plan du disque de frein (A).

20. Frein à disque selon la revendication 19, **caractérisé par** un élément de compression (9) qui se prolonge parallèlement au plan du disque de frein (A) et qui est pressé par l'arbre de serrage (8) contre au moins une garniture de frein (2) pour effectuer un serrage du frein.
